(19)

Europäisches
Patentamt
European
Patent Office
Office européen
des brevets

(11) **EP 2 887 665 A1**

(12) **EUROPEAN PATENT APPLICATION**

(43) Date of publication:
**24.06.2015 Bulletin 2015/26**

(51) Int Cl.:
**H04N 19/126** (2014.01)   **H04N 19/136** (2014.01)
**H04N 19/30** (2014.01)   **H04N 19/85** (2014.01)

(21) Application number: **13306788.4**

(22) Date of filing: **19.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
 • **Lasserre, Sebastien
   35576 CESSON SEVIGNE (FR)**
 • **Leleannec, Fabrice
   35576 CESSON SEVIGNE (FR)**
 • **Thoreau, Dominique
   35576 CESSON SEVIGNE (FR)**

(74) Representative: **Huchet, Anne
Technicolor
1, rue Jeanne d'Arc
92443 Issy-les-Moulineaux Cedex (FR)**

(54) **Method and device for encoding a high-dynamic range image**

(57)    The present invention generally relates to a method and device for encoding an image. The method is characterized in that it comprises:

- obtaining (10) a luminance component ($L$) and each colour component ($C(i)$) of the image, said components belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;

- quantifying (11) the luminance component ($L$) of the image;

- transforming (12) each colour component ($C(i)$) of the image according to a transform (T) which depends on the perceptual threshold ($\Delta E$);

- quantifying (13) each transformed colour component ($C(i)^T$) of the image in order that a metric which is calculated between the image and a decoded version of the image, stays below the perceptual threshold ($\Delta E$); and

- encoding (14) each component of the image

$$(L_Q, C(i)_Q^T).$$

The invention relates also a method and device for decoding a bitstream representing a luminance component and at least one transformed colour component of an image.

Fig. 1

Fig. 1bis

**Description**

**1. Field of invention.**

The present invention generally relates to image/video encoding and decoding. In particular, the technical field of the present invention is related to encoding/decoding of an image whose pixels values belong to a high-dynamic range.

**2. Technical background.**

The present section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Low-Dynamic-Range images (LDR images) are images whose luminance values are represented with a limited number of bits (most often 8 or 10). This limited representation does not allow correct rendering of small signal variations, in particular in dark and bright luminance ranges. In high-dynamic range images (HDR images), the signal representation is extended in order to maintain a high accuracy of the signal over its entire range. In HDR images, pixel values are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A typical approach for encoding an HDR image is to reduce the dynamic range of the image in order to encode the image by means of a traditional encoding scheme (initially configured to encode LDR images).

According to a first approach, a tone-mapping operator is applied to the input HDR image and the tone-mapped image is then encoded by means of a traditional 8-10 bit depth encoding scheme such as JPEG/JPEG200 or MPEG-2, H.264/AVC for video (Karsten Suhring, H.264/AVC Reference Software, http://iphome.hhi.de/suehring/tml/download/, *the book of* I. E. Richardson titled « H.264 and MPEG-4 video compression » published in J. Wiley & Sons in September 2003*).* Then, an inverse tone-mapping operator is applied to the decoded image and a residual is calculated between the input image and the decoded and inverse-tone-mapped image. Finally, the residual is encoded by means of a second traditional 8-10 bit-depth encoder scheme.

The main drawbacks of this first approach are the use of two encoding schemes and the limitation of the dynamic range of the input image to twice the dynamic range of a traditional encoding scheme (16-20 bits).

According to a second approach, the input HDR image is converted in order to get a visually lossless representation of the image pixels in a colour space in which values belong to a dynamic range which is compatible with a traditional 8-10 or an extended 12, 14 or 16 bits depth encoding scheme such as HEVC for example (B. Bross, W.J. Han, G. J. Sullivan, J.R. Ohm, T. Wiegand JCTVC-K1003, "High Efficiency Video Coding (HEVC) text specification draft 9," Oct 2012) and its high bit-depth extensions.

Using a traditional encoding scheme for encoding an HDR image involves using a same bit depth for encoding the whole image. That involves large sizes of the compressed images. Consequently, such typical approaches cannot be used in applications requiring high coding performances such, for example, in a transmission context where high compression rates are required.

**3. Summary of the invention.**

The invention sets out to remedy some of the drawbacks of the prior art with a method for encoding an image, characterized in that it comprises:

- obtaining a luminance component and each colour component of the image, said components belonging to a perceptual space having a metric whose values are a function of the differences between the visual perceptions of two points of said perceptual space, and a perceptual threshold defining an upper bound of the said metric and enabling a control of the visual losses in a displayed decoded version of the image;
- quantifying the luminance component of the image;
- transforming each colour component of the image according to a transform which depends on the perceptual threshold;
- quantifying each transformed colour component of the image in order that a metric which is calculated between the image and a decoded version of the image, stays below the perceptual threshold; and
- encoding each component of the image.

Obtaining an expression of each component of an image to encode in a perceptual space and quantifying these components in the perceptual space by maintaining the metric values below a perceptual threshold ensures a quantification of the image with a control of the visual losses in a displayed decoded version of the image and even a visual-lossless quantification of this image according to some specific values of said perceptual threshold.

Moreover, transforming each colour component of the image according to a transform which depends on a perceptual threshold reduces the dynamic of the colour component which may be encoded with few bits. The dynamic ranges of the luminance and colour components are then limited to a number of bits which allows using a traditional encoding/decoding scheme to encode these components.

Thus, the combination of the features allows an optimal tradeoff between a high compression rate, few visually losses and low encoding/decoding complexity.

According to an embodiment, at least one of said components of the image is quantified on a number of bits which is determined from encoding capabilities of the encoder performing the encoding step.

According to an embodiment, the perceptual threshold is determined according to reference lighting conditions of the display of a decoded version of the encoded image and a version of the luminance component of the image.

According to an embodiment, the perceptual threshold is determined from the ratio of the brightness value of the version of the luminance component of the image over a maximal environmental brightness value.

According to an embodiment, the transform is a normalization of each color component by means of the perceptual threshold.

According to an embodiment, the original dynamic range of the luminance component of the image is reduced before quantifying the luminance component of the image, and the dynamic range of the version of the luminance component of the image is increased to reach the original dynamic range before determining the perceptual threshold.

According to another of its aspects, the invention relates to a method for decoding a bitstream representing a luminance component and at least one transformed colour component of an image, characterized in that it comprises:

- obtaining, by an at least partial decoding of the bitstream, an estimate of the luminance component and an estimate of each transformed colour component, said components belonging to a perceptual space having a metric whose values are a function of the differences between the visual perceptions of two points of said perceptual space, and a perceptual threshold defining an upper bound of the said metric and enabling a control of the visual losses in a displayed decoded version of the image;
- applying an inverse-transform depending on the perceptual threshold to the estimate of each transformed colour component; and
- obtaining a decoded image by associating the estimate of the luminance component and the inverse-transformed estimate of each colour component.

According to an embodiment, the dynamic range of the estimate of the luminance component is increased to reach a targeted dynamic range before obtaining the decoded image.

According to another of its aspects, the invention relates to a device for encoding an image, characterized in that it comprises means for:

- obtaining a luminance component and each colour component of the image, said components belonging to a perceptual space having a metric whose values are a function of the differences between the visual perceptions of two points of said perceptual space, and a perceptual threshold defining an upper bound of the said metric and enabling a control of the visual losses in a displayed decoded version of the image;
- quantifying the luminance component of the image;
- transforming each colour component of the image according to a transform which depends on the perceptual threshold;
- quantifying each transformed colour component of the image in order that a metric which is calculated between the image and a decoded version of the image, stays below the perceptual threshold; and
- encoding each component of the image.

According to another of its aspects, the invention relates to a device for decoding a bitstream representing a luminance component and at least one transformed colour component of an image, characterized in that it comprises means for:

- obtaining, by an at least partial decoding of the bitstream, an estimate of the luminance component and an estimate of each transformed colour component, said components belonging to a perceptual space having a metric whose values are a function of the differences between the visual perceptions of two points of said perceptual space, and a perceptual threshold defining an upper bound of the said metric and enabling a control of the visual losses in a displayed decoded version of the image;

- applying an inverse-transform depending on the perceptual threshold to the estimate of each transformed colour component; and
- obtaining a decoded image by associating the estimate of the luminance component and the inverse-transformed estimate of each colour component.

According to an embodiment, the device further comprising means for obtaining reference lighting conditions of the display of a decoded version of the encoded image.

The specific nature of the invention as well as other objects, advantages, features and uses of the invention will become evident from the following description of a preferred embodiment taken in conjunction with the accompanying drawings.

## 4. List of figures.

The embodiments will be described with reference to the following figures:

- **Fig. 1-1bis** show block diagrams of the steps of a method for encoding an image I in accordance with embodiments of the invention;
- **Fig. 2** shows a block diagram of the steps of a method, in accordance with an embodiment of the invention, for decoding a bitstream representing a luminance component and at least one transformed colour component of an image;
- **Fig. 3** shows an example of an architecture of a device;
- **Fig. 4** shows two remote devices communicating over a communication network;

## 5. Detailed description of a preferred embodiment of the invention.

The present invention will be described more fully hereinafter with reference to the accompanying figures, in which embodiments of the invention are shown. This invention may, however, be embodied in many alternate forms and should not be construed as limited to the embodiments set forth herein. Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the invention.

The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The invention is described for encoding/decoding an image but extends to the encoding/decoding of a sequence of images (video) because each image of the sequence is sequentially encoded/decoded as described below.

References to elements which are identical in the **Figs.** refer to the same elements.

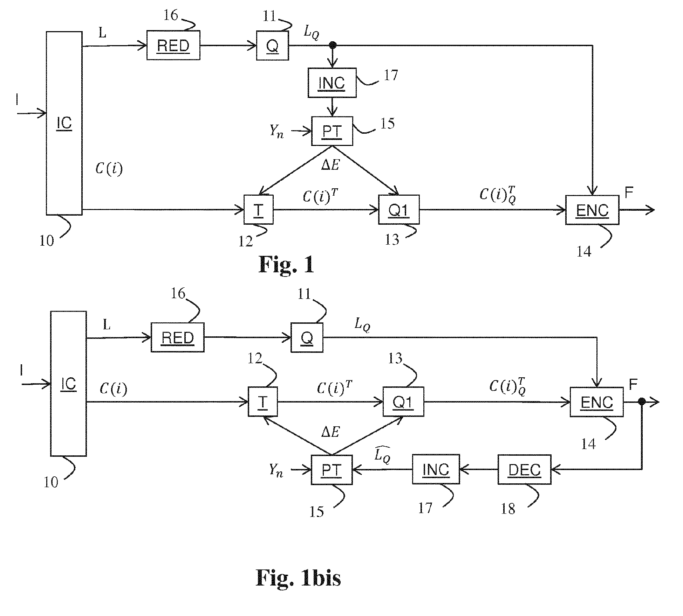

**Fig. 1** shows a block diagram of the steps of a method for encoding an image I in accordance with an embodiment of the invention.

In step 10, a module IC obtains each component of the image I to be encoded. The image I comprises a luminance component L and at least one colour component $C(i)$ with **i** an index which identifies a colour component of the image I. The components of the image I belong to a perceptual space, usually a 3D space, i.e. the image I comprises a luminance component L and two colour components $C(1)$ and $C(2)$ also referred to as C1 and C2 in what follows.

A perceptual space has a metric $d((L, C1, C2), (L', C1', C2'))$ whose values are representative of, preferably proportional to, the differences between the visual perceptions of two points of said perceptual space.

Mathematically speaking, the metric $d((L, C1, C2), (L', C1', C1'))$ is defined such that a perceptual threshold $\Delta E_0$ (also referred to as the JND, Just Noticeable Difference) exists below which a human being is not able to perceive a visual difference between two colours of the perceptual space, i.e.

$$d\big((L, C1, C2), (L', C1', C2')\big) < \Delta E_0, \qquad (1)$$

and this perceptual threshold is independent of the two points $(L, C1, C2)$ and $(L', C1', C2')$ of the perceptual space.

Thus, encoding an image whose components belong to a perceptual space in order that the metric $d$ of equation (1) stays below the perceptual threshold $\Delta E_0$ ensures that the displayed decoded version of the image is visually lossless.

According to an embodiment, the metric may be calculated on a pixel base.

It may be noted that, in practice, it is easier to control the three following inequalities individually:

$$d(L, L') < \Delta E_0^L, \qquad d(C1, C1') < \Delta E_0^{C1} \ \text{ and } \ d(C2, C2') < \Delta E_0^{C2}$$

It may be noted that, if the equation (1) is fulfilled with a perceptual threshold greater than $\Delta E_0$, it is said, in what follows, that the encoded image is visually controlled, i.e. the visual losses in a displayed decoded version of this image are controlled.

When the image I comprises components belonging to a non perceptual space such as (R,G,B) for example, a perceptual transform is applied to the image I in order to obtain a luminance component L and potentially two colours components C1 and C2 which belong to the perceptual space.

Such a perceptual transform is defined from the lighting conditions of the display and depends on the initial colour space.

For example, assuming the initial space is the (R,G,B) colour space, the image I is first transformed to the well-known linear space (X, Y, Z) (an inverse gamma correction may be potentially needed) and the resulting image is then transformed from reference lighting conditions of the display of a decoded version of the encoded image which are here a 3D vector of values $(X_n, Y_n, Z_n)$ in the (X,Y,Z) space.

Consequently, for example, such a perceptual transform is defined as follows when the perceptual space LabCIE1976 is selected:

$$L^* = 116 f(Y/Y_n) - 16$$

$$a^* = 500\big(f(X/X_n) - f(Y/Y_n)\big)$$

$$b^* = 200\big(f(Y/Y_n) - f(Z/Z_n)\big)$$

where f is a conversion function for example given by:

$$f(r) = r^{1/3} \quad if\ r > (6/29)^3$$

$$f(r) = \frac{1}{3} * \left(\frac{29}{6}\right)^2 * r + \frac{4}{29} \qquad otherwise$$

The following metric may be defined on the perceptual space LabCIE1976:

$$d\big((L^*, a^*, b^*), (L^{*\prime}, a^{*\prime}, b^{*\prime})\big)^2 = (\Delta L^*)^2 + (\Delta a^*)^2 + (\Delta b^*)^2 < (\Delta E_0)^2$$

with $\Delta L^*$ being the difference between the luminance components of the two colours ($L^*$, $a^*$, $b^*$) and ($L^{*\prime}$, $a^{*\prime}$, $b^{*\prime}$) and $\Delta a^*$ (respectively $\Delta b^*$) being the difference between the colour components of these two colours.

According to another example, when the perceptual space $Lu^*v^*$ is selected, a perceptual transform is defined as follows:

$$u^* = 13L(u' - u'_{white}) \text{ and } v^* = 13L(v' - v'_{white})$$

where

$$u' = \frac{4X}{X+15Y+3Z}, \qquad v' = \frac{9Y}{X+15Y+3Z},$$

and

$$u'_{white} = \frac{4X_n}{X_n+15Y_n+3Z_n}, \qquad v'_{white} = \frac{9Y_n}{X_n+15Y_n+3Z_n}.$$

The following Euclidean metric may be defined on the perceptual space $Lu^*v^*$:

$$d\big((L^*, u^*, v^*), (L^{*\prime}, u^{*\prime}, v^{*\prime})\big)^2 = (\Delta L)^2 + (\Delta u^*)^2 + (\Delta v^*)^2$$

with $\Delta L^*$ being the difference between the luminance components of the two colours ($L^*$, $u^*$, $v^*$) and ($L^{*\prime}$, $u^{*\prime}$, $v^{*\prime}$) and $\Delta u^*$ (respectively $\Delta v^*$) being the difference between the colour components of these two colours.

The invention is not limited to the perceptual space LabCIE1976 but mat be extended to any type of perceptual space such as the LabCIE1994, LabCIE2000, which are the same Lab space but with a different metric to measure the perceptual distance, or any other Euclidean perceptual space for instance. Other examples are LMS spaces and IPT spaces. A condition is that the metric shall be defined on these perceptual spaces in order that the metric is preferably proportional to the perception difference; as a consequence, a homogeneous maximal perceptual threshold $\Delta E_0$ exists below which a human being is not able to perceive a visual difference between two colours of the perceptual space.

In step 11, a module Q quantifies the luminance component $L$ on a determined number of bits, typically 8, 10 or 12 bits.

According to an embodiment, the number of bits is determined according to the capabilities of the encoding/decoding scheme used later (steps 14 and 18).

According to an embodiment, the quantification is a quantification with a constant step. Typically the step equals 1 to ensure that the equation (1) is fulfilled.

The quantified version of the luminance component is called the quantified luminance component $L_Q$ in what follows.

In step 14, the quantified luminance component $L_Q$, output from step 11, is encoded by means of an encoder ENC.

The output of the step 14 forms a bitstream F that may be stored and/or transmitted over a communication network.

In step 12, a module T transforms each colour component $C(i)$ according to a transform T which depends on a perceptual threshold $\Delta E$ defining an upper bound of the metric, defined in the perceptual space, and enabling a control of the visual losses in a displayed decoded version of the image.

In step 15, the perceptual threshold $\Delta E$ is determined according to reference lighting conditions $Y_n$ of the display of a decoded version of the encoded image and a version of the luminance component L.

According to an embodiment of the step 15, illustrated in **Fig. 1**, the version of the luminance component L is the quantified luminance component $L_Q$.

According to an embodiment of the step 15, illustrated in **Fig. 1bis,** the version of the luminance component L is a decoded version $\widehat{L_Q}$ of the encoded quantified luminance component.

This embodiment ensures that the perceptual threshold $\Delta E$ is the same on both the encoder and the decoder side.

The brightness of the version (either $L_Q$ or $\widehat{L_Q}$) of the luminance component L is not constant over the image but changes locally. For example, if the version (either $L_Q$ or $\widehat{L_Q}$) of the luminance component L is quantified per block by assigning a same quantification value to each pixel of a block, the perceptual threshold $\Delta E$ is constant over each block but the quantification values of two blocks of the image may be different. Consequently, the perceptual threshold $\Delta E$ changes locally according to the brightness values of the image.

The local changes of the perceptual threshold $\Delta E$ are not limited to block-based changes but may extend to any zones defined over the image by means of any operator such as a segmentation operator based for example on the brightness values of the image.

In step 18, the decoded version $\widehat{L_Q}$ of the encoded quantified luminance component is obtained by a at least partially decoding of the bitstream F by means of a decoder DEC. Such a decoder DEC implements inverse operations compared to the operations of the encoder ENC (step 14).

According to an embodiment of step 15, assuming, during the display of the image, a potential increase of the lighting until a maximal environmental brightness value $Y_n$, the perceptual threshold $\Delta E$ is determined from the ratio of the brightness value $Y_Q$ of a version (either $L_Q$ or $\widehat{L_Q}$) of the luminance component L over the maximal environmental brightness value $Y_n$.

According to an embodiment of step 15, when coding degradation over the maximal environmental brightness value is forbidden, the perceptual threshold $\Delta E$ is then given by:

$$\Delta E = \Delta E_{enc} \left(\frac{Y_Q}{Y_n}\right)^{\frac{1}{3}} = \frac{\Delta E_{enc}(L+16)}{116} \qquad (2)$$

with $(X_n, Y_n, Z_n)$ being reference lighting conditions of the display of a decoded version of the encoded image and $Y_Q$ being a value which represents the brightness of a version (either $L_Q$ or $\widehat{L_Q}$) of the luminance component L and $\Delta E_{enc}$ being a perceptual encoding parameter. Typically, $\Delta E_{enc}$ is chosen to be close to $\Delta E_0$ for visually lossless encoding and greater than $\Delta E_0$ for an encoding with a control of the visual losses in the encoded image.

Thus, using such a perceptual threshold $\Delta E$ allows adapting the encoding to the environmental lighting conditions of a decoded version of the encoded image.

Alternatively, the reference lighting conditions of the display of a decoded version of the encoded image ($X_n$, $Y_n$, $Z_n$) which have a local character, may be replaced by global reference lighting conditions of the display of a decoded version of the encoded image defined by ($X_n'$, $Y_n'$, $Z_n'$) = ($X_n$, $Y_n$, $Z_n$) $Y_Q/Y_n$.

From a coding point of view (color coding), this replacement is equivalent to the choice of the perceptual threshold $\Delta E$ (2) because encoding with a precision equal to $\Delta E$ of a color component $a^*$ in the color space LabCIE1976, which is given by

$$a^* = 500\big(f(X/X_n) - f(Y/Y_n)\big) \approx 500\big((X/X_n)^{1/3} - (Y/Y_n)^{1/3}\big)$$

is equivalent to encode with a precision equals to $\Delta E_{enc}$ of the color component $a^{*\prime}$ which is given by

$$a^{*\prime} = 500\big(f(X/X_n') - f(Y/Y_n')\big) \approx 500\big((X/X_n')^{1/3} - (Y/Y_n')^{1/3}\big)$$

The same remark applies to the other component $b^*$. Therefore, instead of changing the perceptual space locally, one just adapts the threshold from $\Delta E_{enc}$ to $\Delta E$.

According to an embodiment of the step 15, to avoid a sub-coding of the parts of the image having high brightness values, the perceptual threshold $\Delta E$ is given by

$$\Delta E = \Delta E_{enc} min\left\{\left(\frac{Y_Q}{Y_n}\right)^{1/3}, E_{max}\right\}$$

where an upper-bound is set to $\Delta E_{enc}E_{max}$, typically, $E_{max}$ is set to 1. This last equation means that the brightness of a version (either $L_Q$ or $\widehat{L_Q}$) of the luminance component L is never taken to be greater than the maximal environmental brightness value $Y_n$.

On the other hand, in order to avoid over-coding of the parts of the image having very low brightness values, the perceptual threshold $\Delta E$ is then given by:

$$\Delta E = \Delta E_{enc} max\left\{\left(\frac{Y_Q}{Y_n}\right)^{1/3}, E_{min}\right\}$$

where a lower-bound is set to $\Delta E_{enc}E_{min}$; typically, $E_{min}$ is set to about 1/5. This is due to a contrast masking effect of the dark local brightness of the a version (either $L_Q$ or $\widehat{L_Q}$) of the luminance component L by the maximal environmental brightness value $Y_n$.

A combination of both bounds is simply obtained by

$$\Delta E = \Delta E_{enc} min\left\{max\left\{\left(\frac{Y_Q}{Y_n}\right)^{1/3}, E_{min}\right\}, E_{max}\right\}$$

According to an embodiment of step 12, the transform T is a normalization of each color component by means of the perceptual threshold $\Delta E$.

The transform T is thus a function of the perceptual threshold which changes locally.

According to an embodiment of step 12, the normalization of a colour component by means of the perceptual

threshold $\Delta E$ is the division of this colour component by a value which is a function of the perceptual threshold $\Delta E$.

Mathematically speaking, each colour component $C(i)$ is then transformed, for example, as follows to obtain a transformed colour component $C(i)^T$:

$$C(i)^T = T(C(i), \Delta E) = \frac{C(i)}{\Delta E^\alpha}$$

with $\alpha$ being a value equal, for example, to 0.5 or 1.

This embodiment is advantageous, in particular to ensure a good quantifying of the dark zones of the image. Actually, dark zones have very low luminance pixel values which may be much lower than 1. Thus, if no normalization by means of the perceptual threshold $\Delta E$ is performed, all these pixels will be mapped to 0 before quantifying, missing the wanted perceptual quantifying precision. The normalization by means of the perceptual threshold $\Delta E$, which is small in such zones, stretches the pixel values allowing a sufficient format precision before quantifying. Also, for very bright pixels, the normalization avoids too large pixel values by dividing the pixel values by the perceptual threshold $\Delta E$ which is much bigger than 1 in bright zones.

In step 13, a module Q1 quantifies each transformed colour component $C(i)^T$ in order that a metric which is calculated between the image I and a decoded version of the image, stays below the perceptual threshold $\Delta E$.

Thus, the visual losses of each quantified colour components depend on the value of the perceptual threshold $\Delta E$. A visually-lossless quantification is thus reached when the perceptual threshold $\Delta E$ is lower than or equal to the perceptual threshold $\Delta E_0$.

Similarly, each transformed colour component $C(i)^T$ is divided by the perceptual threshold $\Delta E_0$ and then the resulting component is quantified in order that the metric of equation (1) stays below 1 to reach a visually-lossless quantification of the colour component.

Each transformed colour component $C(i)^T$ is quantified on a determined number of bits, typically 8, 10 or 12 bits.

According to an embodiment, the number of bits is determined according to the capabilities of the encoding/decoding scheme (step 14).

According to an embodiment, the quantification is a quantification with a constant step. Typically the step equals 1 to ensure that the equation (1) is fulfilled.

In step 14, each quantified transformed colour component $C(i)_Q^T$, output from step 13, is encoded by means of the encoder ENC and added to the bitstream F.

According to an embodiment of the method for encoding the image I, a module RED reduces the original dynamic range of the luminance component of the image I (step 16) before quantifying (step 11) the luminance component of the image I, and a module INC increases the dynamic range of the version (either $L_Q$ or $\widehat{L_Q}$) of the luminance component L (step 17) to reach the original dynamic range before determining the perceptual threshold (step 15).

Then, the pixels values of the quantified luminance component $L_Q$, input of the steps 11 and 14, belong to a reduced dynamic range and the pixels values of the version (either $L_Q$ or $\widehat{L_Q}$) of the luminance component L, input of the step 15, belong to the original dynamic range of the luminance component of the image I.

This embodiment is advantageous because it requires an encoder of n bits (number of bits for the quantification), typically 8, 10 or 12 bits, to encode the quantified luminance component $L_Q$ and each quantified transformed colour component whose dynamic range is less than the dynamic range of the quantified luminance component $L_Q$.

It may be noted that according to this embodiment, when the coding degradation over the maximal environmental brightness value is forbidden, the perceptual threshold $\Delta E$ (step 15) is then given by:

$$\Delta E = \Delta E_{enc} \left(\frac{Y_Q}{Y_n}\right)^{\frac{1}{3}} = \frac{\Delta E_{enc} L_Q^{Q-1}}{116} \qquad (3)$$

with $L_Q^{Q-1}$ being the version (either $L_Q$ or $\widehat{L_Q}$) of the luminance component L whose pixels values belong to the original dynamic range (step 17).

Mathematically speaking, when the reduction of the dynamic range is obtained by applying a dynamic-range-reduction function $f$ on the luminance component L, then the luminance component $L_Q^{Q-1}$ whose pixel values belong to a dynamic range equals to the original dynamic range is given by:

$$L_Q^{Q-1} = f^{-1}\big(f(L)_Q\big)$$

with $f(L)_Q$ being the version (either $L_Q$ or $\widehat{L_Q}$ ) of the luminance component L whose pixels values belong to the reduced dynamic range.

According to a variant of this embodiment, the dynamic-range-reduction function $f$ has mainly a logarithm shape or a S-log shape with Y, i.e. $f: Y \to \alpha \ln(Y + \beta) + \gamma$.

According to a variant of this embodiment, the dynamic-range-reduction function $f$ has mainly a power in Y, i.e. $f: Y \to Y^\gamma$ with typically $\gamma$ smaller than 1 to ensure dynamic compression.

According to a variant of this embodiment, the dynamic-range-reduction function $f$ is a monotone function. For instance the transfer functions suggested in the document "Image dynamic range in television systems", ITU, Document 6C/77-E, 02 October 2012, may be used.

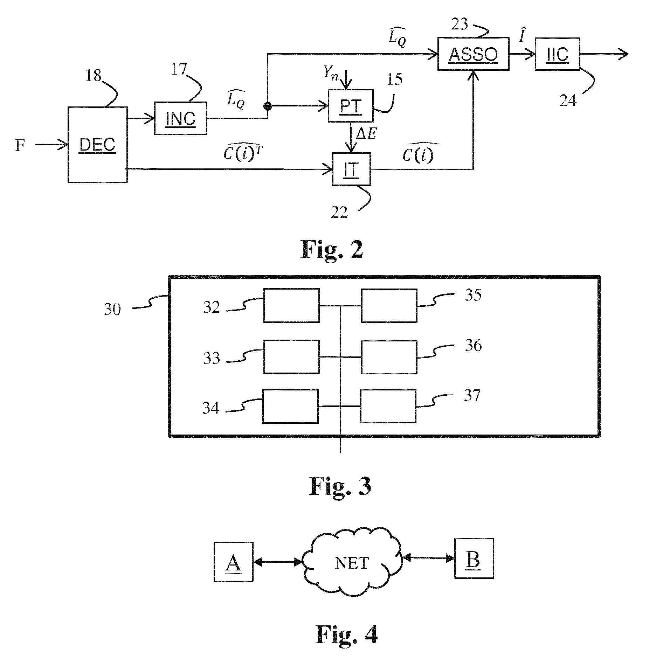

**Fig. 2** shows a block diagram of the steps of a method, in accordance with an embodiment of the invention, for decoding a bitstream F representing a luminance component and at least one transformed colour component of an image which belongs to a perceptual space described above.

In step 18, an estimate $\widehat{L_Q}$ of a luminance component and an estimate $\widehat{C(\imath)^T}$ of each colour component are obtained by a at least partially decoding of the bitstream F by means of a decoder DEC.

In step 15, a perceptual threshold $\Delta E$ is determined, as described above.

Thus, according to an embodiment, the perceptual threshold $\Delta E$ is determined according to reference lighting conditions of the display of a decoded version of the encoded image and the estimate $\widehat{L_Q}$ of the luminance component.

According to an embodiment, described above in relation to step 17, when the dynamic range of the quantified luminance component $L_Q$ of the image I has been reduced before quantification (step 16), the estimate $\widehat{L_Q}$ of the luminance component has pixels values which belong to the reduced dynamic range. Thus, during step 17, a module INC increases the dynamic range of the estimate $\widehat{L_Q}$ of the luminance component to reach a target dynamic range such as, for example, the original dynamic range of the luminance component L of the image I.

In step 22, a module IT transforms the estimate $\widehat{C(\imath)^T}$ of each transformed colour component by applying an inverse-transform IT. Said inverse-transform IT depends on the perceptual threshold $\Delta E$.

It may be noted that the term "inverse-transform" stands for a transform which has a reverse function compared to the function of the transform T which was applied during step 12.

According to an embodiment, when the transform T is a normalization of each color component by means of the perceptual threshold $\Delta E$, the transform IT is a re-normalization of the estimate $\widehat{C(\imath)^T}$ of each transformed colour component by means of the perceptual threshold $\Delta E$.

According to an embodiment of the step 22, the re-normalization is the multiplication by a value which is a function of the perceptual threshold $\Delta E$.

Mathematically speaking, the estimate of each transformed colour component is inverse-transformed, for example, as follows:

$$\widehat{C(\imath)} = IT\big(\widehat{C(\imath)^T},\Delta E\big) = \widehat{C(\imath)^T} \cdot \Delta E^\alpha$$

with $\alpha$ being a value equal, for example, to 0.5 or 1.

In step 23, the estimate $\widehat{L_Q}$ of the luminance component and the inverse-transformed estimate $\widehat{C(i)}$ of each colour component are associated together to get a decoded image $\hat{I}$.

According to a variant, in step 24, a module IIC is configured to apply an inverse perceptual transform to the decoded image $\hat{I}$, output from step 23. For example, the estimate of the decoded image $\hat{I}$ is transformed to the well-known space (X, Y, Z).

When the perceptual space LabCIE1976 is selected, the inverse perceptual transform is given by:

$$X = X_n f^{-1}\left(\frac{1}{116}(L^* + 16) + \frac{1}{500}a^*\right)$$

$$Y = Y_n f^{-1}\big(1/116(L^* + 16)\big)$$

$$Z = Z_n f^{-1}\left(\frac{1}{116}(L^* + 16) + \frac{1}{200}b^*\right)$$

When the perceptual space Luv is selected, the inverse perceptual transform is given by:

$$X = \frac{9Yu'}{4v'}$$

$$Y = Y_n f^{-1}\left(\frac{1}{116}(L^* + 16)\right)$$

$$Z = \frac{3Y(4 - u')}{4v'} - 5Y$$

Potentially, the image in the space (X,Y,Z) is inverse transformed to get of the decoded image in the initial space such as (R,G,B) space.

Potentially, during step 14, data of the bitstream F are also at least partially entropy-decoded.

The decoder DEC is configured to decode data which have been encoded by the encoder ENC.

The encoder ENC (and decoder DEC) is not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoder ENC (and decoder DEC) is not limited to a specific encoder which may be, for example, an image/video coder with loss like JPEG, JPEG2000, MPEG2, h264/AVC or HEVC.

On **Fig. 1-1bis** and **2**, the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the invention are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

**Fig. 3** represents an exemplary architecture of a device 30 which may be configured to implement a method described in relation with **Fig. 1-1 bis** and **2.**

Device 30 comprises following elements that are linked together by a data and address bus 31:

- a microprocessor 32 (or CPU), which is, for example, a DSP (or Digital Signal Processor);
- a ROM (or Read Only Memory) 33;

- a RAM (or Random Access Memory) 34;
- an I/O interface 35 for reception of data to transmit, from an application; and
- a battery 36

According to a variant, the battery 36 is external to the device. Each of these elements of **Fig. 3** are well-known by those skilled in the art and won't be disclosed further. In each of mentioned memory, the word « register » used in the specification can correspond to area of small capacity (some bits) or to very large area (e.g. a whole program or large amount of received or decoded data). ROM 33 comprises at least a program and parameters. Algorithm of the methods according to the invention is stored in the ROM 33. When switched on, the CPU 32 uploads the program in the RAM and executes the corresponding instructions.

RAM 34 comprises, in a register, the program executed by the CPU 32 and uploaded after switch on of the device 30, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to an embodiment, the device further comprises means for obtaining reference lighting conditions of the display of a decoded version of the encoded image such as a maximal environmental brightness value $Y_n$.

According to an embodiment, the device comprises a display 37 and the means for obtaining reference lighting conditions of the display of a decoded version of the encoded image are configured to determine such reference lighting conditions from some characteristics of the display 37 or from lighting conditions around the display 36 which are captured by the apparatus.

For instance, the means for obtaining a maximal environmental brightness value $Y_n$ are a sensor attached to the display and which measures the environmental conditions. A photodiode or the like may be used to this purpose.

According to an embodiment illustrated in **Fig. 4**, in a transmission context between two remote devices A and B over a communication network NET, the device A comprises means which are configured to implement a method for encoding an image as described in relation with the **Fig. 1-1 bis** and the device B comprises means which are configured to implement a method for decoding as described in relation with **Fig. 2**. The device B may also comprise a display 37.

The devices A and B are both configured to know the reference lighting conditions of the display of a decoded version of the encoded image such a same maximal environmental brightness value $Y_n$.

For example, the devices A and B store the same reference lighting conditions of the display of a decoded version of the encoded image such a same maximal environmental brightness value $Y_n$.

Alternatively, the device B is configured to obtain the reference lighting conditions of the display of a decoded version of the encoded image such a maximal environmental brightness value $Y_n$ and to send it to the device A. The device A is then configured to receive such a transmitted reference lighting conditions of the display of a decoded version of the encoded image such a maximal brightness value $Y_n$.

Inversely, the device A is configured to obtain the reference lighting conditions of the display of a decoded version of the encoded image such a maximal environmental brightness value $Y_n$, for example from a storing memory, and to send it to the device B. The device B is then configured to receive such a transmitted reference lighting conditions of the display of a decoded version of the encoded image such a maximal environmental brightness environmental value $Y_n$.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1.  Method for encoding an image, **characterized in that** it comprises:

    - obtaining (10) a luminance component ($L$) and each colour component ($C(i)$) of the image, said components belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;
    - quantifying (11) the luminance component ($L$) of the image;
    - transforming (12) each colour component ($C(i)$) of the image according to a transform (T) which depends on the perceptual threshold ($\Delta E$);
    - quantifying (13) each transformed colour component ($C(i)^T$) of the image in order that a metric which is calculated between the image and a decoded version of the image, stays below the perceptual threshold ($\Delta E$); and

    - encoding (14) each component of the image ($L_Q$, $C(i)_Q^T$).

2.  Method according to the claim 1, wherein at least one of said components of the image is quantified on a number of bits which is determined from encoding capabilities of the encoder performing the encoding step.

3.  Method according to the claim 1 or 2, wherein the perceptual threshold ($\Delta E$) is determined according to reference lighting conditions of the display of a decoded version of the encoded image and a version (either $L_Q$ or $\widehat{L_Q}$) of the luminance component (L) of the image (I).

4.  Method according to the claim 3, wherein the perceptual threshold ($\Delta E$) is determined from the ratio of the brightness value ($Y_Q$) of the version (either $L_Q$ or $\widehat{L_Q}$) of the luminance component (L) of the image (I) over a maximal environmental brightness value ($Y_n$).

5.  Method according to any previous claim, wherein the transform is a normalization of each color component by means of the perceptual threshold ($\Delta E$).

6.  Method according to any previous claim, wherein the original dynamic range of the luminance component of the image is reduced (16) before quantifying (11) the luminance component of the image, and the dynamic range of the version (either $L_Q$ or $\widehat{L_Q}$ ) of the luminance component L is increased (17) to reach the original dynamic range before determining the perceptual threshold (15).

7. Method for decoding a bitstream representing a luminance component and at least one transformed colour component of an image, **characterized in that** it comprises:

- obtaining (18), by an at least partial decoding of the bitstream, an estimate $\left(\widehat{L_Q}\right)$ of the luminance component and an estimate $\left(\widehat{C(i)^T}\right)$ of each transformed colour component, said components belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;

- applying (22) an inverse-transform depending on the perceptual threshold ($\Delta E$) to the estimate $\left(\widehat{C(i)^T}\right)$ of each transformed colour component; and

- obtaining (23) a decoded image ($\hat{I}$) by associating the estimate $\left(\widehat{L_Q}\right)$ of the luminance component and the inverse-transformed estimate $\left(\widehat{C(i)}\right)$ of each colour component.

8. Method according to the claim 7, wherein the dynamic range of the estimate of the luminance component $\left(\widehat{L_Q}\right)$ is increased (17) to reach a targeted dynamic range before obtaining the decoded image ($\hat{I}$).

9. Device for encoding an image, **characterized in that** it comprises means for:

- obtaining a luminance component ($L$) and each colour component ($C(i)$) of the image, said components belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;
- quantifying the luminance component ($L$) of the image;
- transforming each colour component ($C(i)$) of the image according to a transform (T) which depends on the perceptual threshold ($\Delta E$);
- quantifying each transformed colour component ($C(i)^T$) of the image in order that a metric which is calculated between the image and a decoded version of the image, stays below the perceptual threshold ($\Delta E$); and

- encoding each component of the image ($L_Q$, , $C(i)_Q^T$ ).

10. Device for decoding a bitstream representing a luminance component and at least one transformed colour component of an image, **characterized in that** it comprises means for:

- obtaining, by an at least partial decoding of the bitstream, an estimate $\left(\widehat{L_Q}\right)$ of the luminance component and an estimate $\left(\widehat{C(i)^T}\right)$ of each transformed colour component, said components belonging to a perceptual space having a metric whose values are a function of the differences between the visual perceptions of two points of said perceptual space, and a perceptual threshold ($\Delta E$) defining an upper bound of the said metric and enabling a control of the visual losses in a displayed decoded version of the image;

- applying an inverse-transform depending on the perceptual threshold ($\Delta E$) to the estimate $\left(\widehat{C(i)^T}\right)$ of each transformed colour component; and

- obtaining a decoded image ($\hat{I}$) by associating the estimate $\left(\widehat{L_Q}\right)$ of the luminance component and the inverse-transformed estimate $\left(\widehat{C(i)}\right)$ of each colour component.

**11.** Device according to the claim 10, further comprising means for obtaining reference lighting conditions of the display of a decoded version of the encoded image.

**Fig. 1**

**Fig. 1bis**

**Fig. 2**

**Fig. 3**

**Fig. 4**

Europäisches
Patentamt

European
Patent Office

Office européen
des brevets

## EUROPEAN SEARCH REPORT

Application Number

EP 13 30 6788

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 909 249 A (SATHE VINAY [US] ET AL) 1 June 1999 (1999-06-01) * column 3, line 16 - column 4, line 2; figure 2 * ----- | 1-11 | INV. H04N19/126 H04N19/136 H04N19/30 H04N19/85 |
| A | US 5 543 820 A (EDGAR ALBERT D [US]) 6 August 1996 (1996-08-06) * figure 4 * ----- | 1-11 | |
| A | EP 1 744 541 A1 (SONY CORP [JP]) 17 January 2007 (2007-01-17) * paragraphs [0005], [0006] * ----- | 1-11 | |

TECHNICAL FIELDS
SEARCHED      (IPC)

H04N

The present search report has been drawn up for all claims

| Place of search | Date of completion of the search | Examiner |
|---|---|---|
| Munich | 26 May 2014 | Oelbaum, Tobias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 30 6788

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2014

| Patent document cited in search report | | Publication date | Patent family member(s) | | Publication date |
|---|---|---|---|---|---|
| US 5909249 | A | 01-06-1999 | US | 5909249 A | 01-06-1999 |
| | | | US | 6021216 A | 01-02-2000 |
| US 5543820 | A | 06-08-1996 | CA | 2095756 A1 | 15-02-1994 |
| | | | US | 5543820 A | 06-08-1996 |
| EP 1744541 | A1 | 17-01-2007 | CN | 1943221 A | 04-04-2007 |
| | | | EP | 1744541 A1 | 17-01-2007 |
| | | | JP | 4385841 B2 | 16-12-2009 |
| | | | JP | 2005311743 A | 04-11-2005 |
| | | | KR | 20070012668 A | 26-01-2007 |
| | | | TW | I288360 B | 11-10-2007 |
| | | | US | 2007196023 A1 | 23-08-2007 |
| | | | WO | 2005104526 A1 | 03-11-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KARSTEN SUHRING.** H.264/AVC Reference Software. *H.264/AVC Reference Software, http://iphome.hhi.de/suehring/tml/download/*
- **I. E. RICHARDSON.** H.264 and MPEG-4 video compression. J. Wiley & Sons, September 2003
- **B. BROSS ; W.J. HAN ; G. J. SULLIVAN ; J.R. OHM ; T. WIEGAND.** High Efficiency Video Coding (HEVC) text specification draft 9. *JCTVC-K1003,* October 2012
- Image dynamic range in television systems. *ITU, Document 6C/77-E,* 02 October 2012